# EUROPÄISCHE PATENTANMELDUNG

(11) **EP 2 335 974 A1**
(43) Veröffentlichungstag der Anmeldung: **22.06.2011**
(21) Anmeldenummer: 10466030.3
(22) Anmeldetag: 03.12.2010
(51) Int. Cl.: B60P 7/15, B60R 5/04

(54) **Kofferraumablagesystem eines Fahrzeugs**

(30) Priorität: 16.12.2009 CZ 20090851
(71) Anmelder: Skoda Auto A.S., 293 60 Mladá Boleslav (CZ)
(72) Erfinder: Ladislav, Kraus, 51236 Horni Branná (CZ); Polacek, Roman, 56151 Letohrad (CZ)

(57) **Zusammenfassung**

Das zum Transport und Aufbewahrung von Gegenständen im Fahrzeug dienendes Kofferraumablagesystem umfasst eine Führungsbahn (2) oder mindestens zwei in der Seitenwandverkleidung des Gepäckraumes an seinen beiden gegenüberliegenden Seiten angeordnete Verankerungspunkte (3) und mindestens zwei teleskopische Querbalken (1) bestehend aus einem Träger (4) und teleskopischem Segment (5), der an mindestens einem Ende des Trägers (4) angeordnet ist. Ferner umfasst das Kofferraumablagesystem einen Aufbewahrungsbezug (6), der zu den Trägern (4) entlang ihrer ganzen Länge befestigt ist und so die notwendige Ablagefläche bildet.
Die Darstellung der Erfindung liegt darin, dass das teleskopische Segment (5) des Querbalkens (1) aus einem Nutenstein (7), der einen Entsperrteil (15), eine Druckfeder (9) umfasst, und einer Führung (8), die die Bewegung des Nutensteins (7) eingrenzt, besteht. Die Führungsbahn (2) kann eine glatte Kontaktfläche (11) aufweisen, und in diesem Fall weist der Nutenstein (7) eine Frontseite (10) mit adhäsiven Frontfläche (12) auf, oder die Führungsbahn kann eine gerillte Kontaktfläche (13) aufweisen, und in diesem Fall weist der Nutenstein (7) eine Frontseite (10') mit mindestens einen Vorsprung (14) auf, der für eine genaue Einsenkung in die gerillte Kontaktfläche (13) ausgestaltet ist.

## Beschreibung

Die Erfindung betrifft ein zum Transport und Aufbewahrung von Gegenständen in einem Fahrzeug dienendes Ablagesystem, das im Kofferraum eines Fahrzeuges angeordnet und an Verankerungspunkten oder an der Führungsbahn befestigt ist, die in den Seitenverkleidungen des Gepäckraumes ausgebildet sind.

### Bisheriger Stand der Technik

Im W02006029118 ist ein zusammendrückbarer Balken für das Abfangen von Ladegut im Laderaum mit gegenüberliegenden Wänden beschrieben. Der zusammendrückbäre Balken umfasst ein teleskopisches Segment und die Endstücke an gegenüberliegenden Enden des Balkens. Diese Endstücke sind aus einem Elastomer und fangen die durch die Zusammendrückung des teleskopischen Segments ausgelösten übermäßigen Kräfte auf. Die Sperrbalken sind verlängerbare, ausdehnbare (und zusammenziehbare) teleskopische, quadratische, mit Reibpölstern aus Gummi oder Elastomer beendete Röhren, die wegen fester Befestigung an den ebenen Flächen der Seitenwände kräftig gegen die Seitenwände gedrückt werden und so die Balken an ihrem Platz halten. Der Querbalken des Gepäckraumes umfasst teleskopische, quadratische Röhren und zwar so, dass die Röhre mit geringerem Durchmesser in die Röhre mit größerem Durchmesser einsteckbar ist. Der Querbalken umfasst ferner ein Schließmechanismus mit einem lösbaren Klinkenrad und einem Handhebel. Die Klinkenradverzahnung ist an der kleineren Röhre derart ausgestaltet, dass bei manueller Umdrehung des Hebels die kleinere Röhre aus der Größeren ausfährt und so der gesamte Balken verlängert und zu den Seitenwänden des Ladecontainers fest aufgedrückt wird. In der aktiven Randposition, d.h. wenn der Hebel in der vorderen entgegengesetzter Position ist, fahren die Zähne des Klinkenrades aus der Verzahnung der Röhre aus. Der Nachteil dieser Lösung liegt im komplizierteren und aufwändigeren Einbau des Querbalkens in die Funktionsstellung, söwie die Instabilität der bloß flachen Befestigung zu den Seitenwänden.

### Darstellung der Erfindung

Die Aufgabe wird durch ein dem Transport und Aufbewahrung von Gegenständen im Fahrzeug dienendes Ablagesystem im Fahrzeugkofferraum gelöst, das eine Führungsbahn oder mindestens zwei Verankerungspunkte an beiden gegenüberliegenden Seiten der Seitenverkleidung des Gepäckraumes umfasst. Das Kofferraumablagesystem umfasst weiter mindestens zwei teleskopische Querbalken, die aus einem Träger und einem teleskopischen Segment bestehen, das an mindestens einem Ende des jeweiligen Trägers angeordnet ist, und weiter umfasst dieses Ablagesystem einen zum Träger befestigten Aufbewahrungsbezug.

Die Darstellung der Erfindung liegt darin, dass das teleskopische Segment des Querbalkens durch einen Nutenstein, eine Nutensteinführung und eine Druckfeder gebildet wird. Die Führungsbahn weist eine glatte Kontaktfläche und der Nutenstein eine Frontseite mit adhäsiver Frontfläche auf. Die Führungsbahn kann eine gerillte Kontaktfläche aufweisen und in diesem Fall weist der Nutenstein ein Frontseite mit Vorsprüngen auf, die in die gerillte Kontaktfläche eingreifen.

Der Aufbewahrungsbezug kann als eine Plane oder ein Netz ausgebildet werden.

### Übersicht der Figuren der Zeichnungen

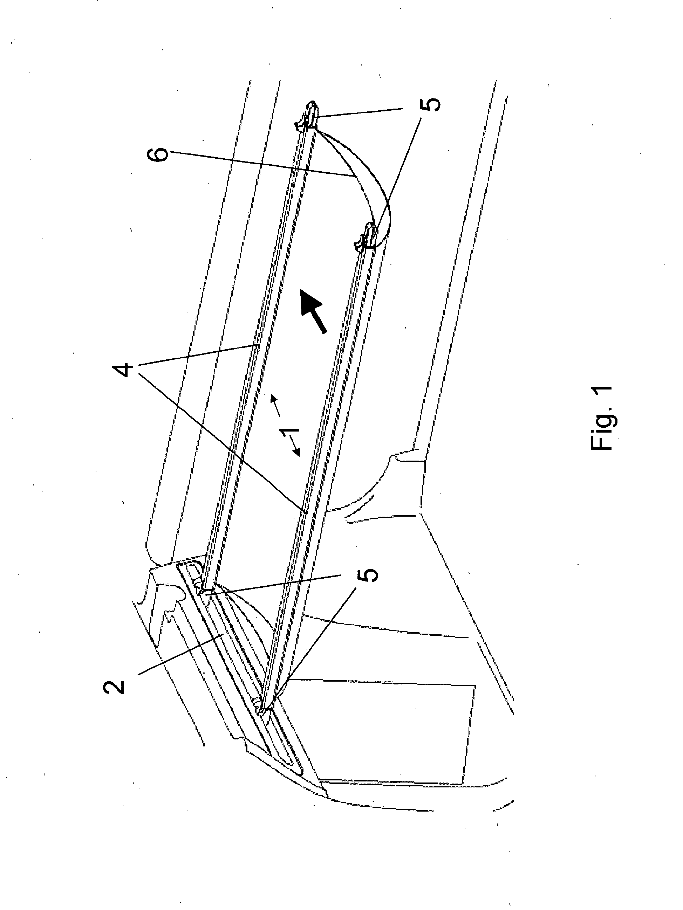

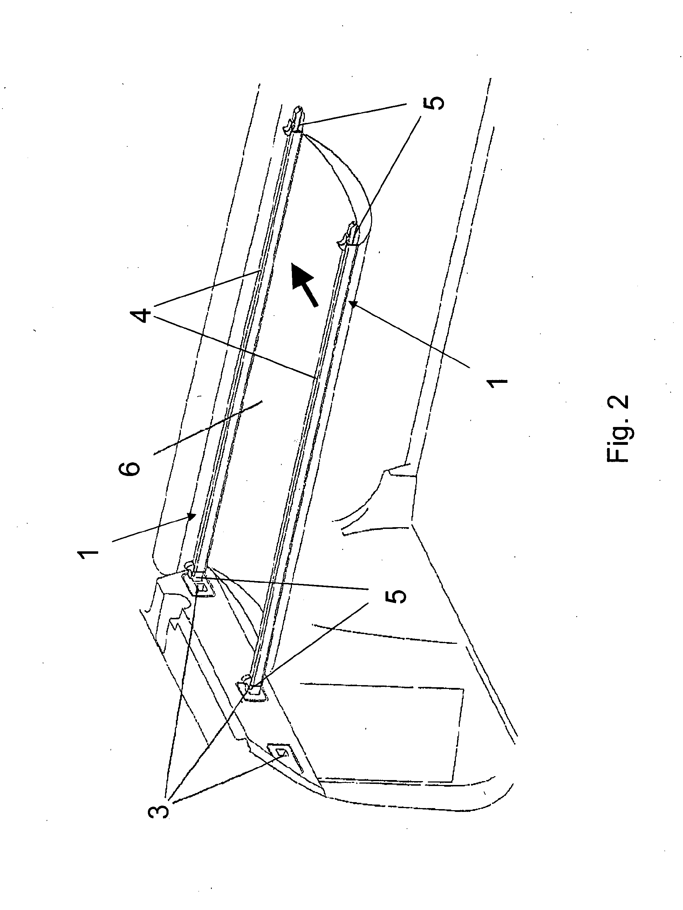

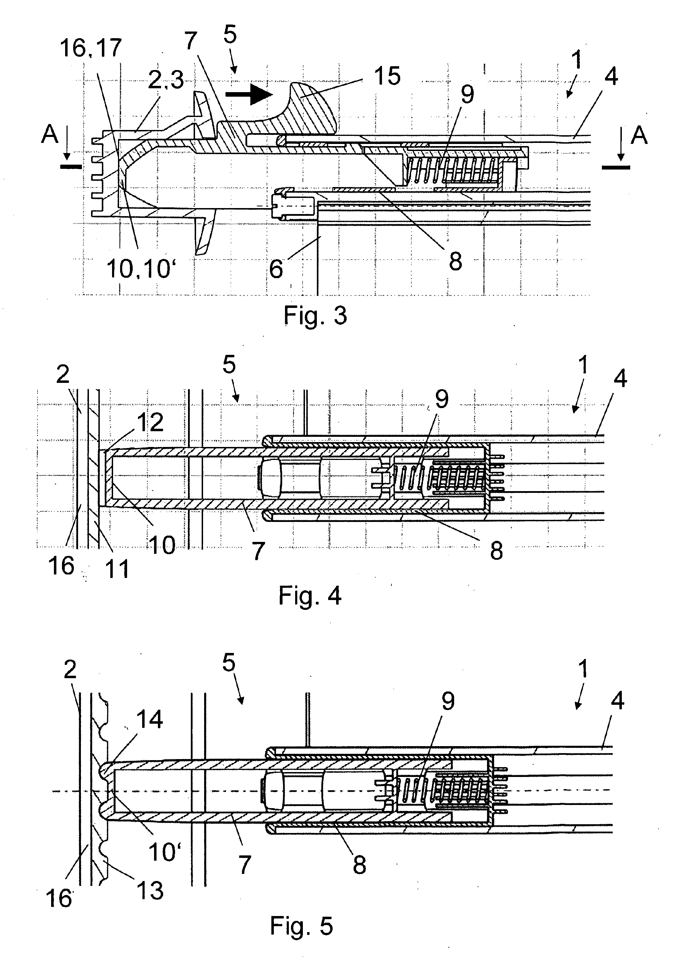

In der Fig. 1 ist ein Kofferraumablagesystem eines Fahrzeugs in einer Axonometrieansicht der Seitenwand des Gepäckraumes in der Variante mit der Verwendung einer Führungsbahn, in Fig. 2 ist ein Kofferraumablagesystem eines Fahrzeugs in einer Axonometrieansicht der Seitenwand des Gepäckraumes in der Variante mit der Verwendung von Verankerungspunkten, in Fig. 3 ist in einem seitlichen Schnitt ein Detail der Befestigung des Kofferraumablagesystems, in Fig. 4 im oberen Schnitt A-A ein Detail der Befestigung des Kofferraumablagesystems in der Variante mit einer glatten Kontaktfläche der Führungsbahn, in Fig. 5 im oberen Schnitt A-A ein Detail der Befestigung des Kofferraumablagesystems in der Variante mit einer gerillten Kontaktfläche der Führungsbahn dargestellt.

### Ausführunpsbeispiele der Erfindung

Ein Kofferraumablagesystem nach Fig. 1, bestehend aus einer Führungsbahn 2, zwei teleskopischen Querbalken 1 und einem Aufbewahrungsbezug 6. Die Führungsbahn 2 ist längs verlaufend in der Seitenwandverkleidung an beiden gegenüberliegenden Seiten des Gepäckraumes angeordnet. Der teleskopische Querbalken 1 besteht aus einem Träger 4 und teleskopischem Segment 5, das an beiden Enden des Trägers 4 angeordnet ist.. Der Aufbewahrungsbezug 6 ist zu beiden Trägern 4 entlang ihrer ganzen Länge befestigt und bildet so die notwendige verbindende Ablagefläche zwischen einzelnen Trägern 4.

Äquivalente Lösung des Kofferraumablagesystems, gemäß Fig. 2, besteht analog der Ausführung nach Fig. 1, aus zwei teleskopischen Querbalken 1 und einem Aufbewahrungsbezug 6. Statt der Führungsbahn 2 sind hier die Verankerungspunkte 3 eingesetzt, die ähnlich wie die Führungsbahn 2 längs in der Seitenwandverkleidung an beiden gegenüberliegenden Seiten des Gepäckraumes angeordnet sind. Gleich wie in der Ausführung nach Fig. 1, besteht der teleskopische Querbalken 1 nach Fig. 2 aus einem Träger 4 und einem teleskopischen Segment 5, das an beiden Enden des Trägers 4 angeordnet ist. Auch der Aufbewahrungsbezug 6 ist ähnlich zu den beiden Trägern 4 entlang ihrer ganzen Länge befestigt und bildet so die notwendige verbindende Ablagefläche zwischen den einzelnen Trägern 4.

Das teleskopische Segment 5 des Querbalkens 1, in beiden Ausführungen nach Fig. 1 sowie Fig. 2, besteht aus einem Nutenstein 7, der einen Entsperrteil 15, eine Druckfeder 9 und eine Führung 8 umfasst, welche die Bewegung des Nutsteines 7, wie in Fig. 3 dargestellt, eingrenzt. An beiden Enden ist innen im Träger 4 eine Druckfeder 9 und Führung 8 angeordnet, in der sich gegen die Feder der Nutenstein 7 bewegt. An dem äußeren Ende des Nutensteines 7 ist eine Frontseite 10, 10' ausgebildet. Die Führungsbahn 2 ist derart ausgestaltet, damit der Nutenstein7 des teleskopischen Segments 5 mit seiner Frontseite 10 genau in sie eingreift und die innere Hinterwand 16 der Führungsbahn 2 berührt. Ebenso die Verankerungspunkte 3 sind derart ausgestaltet, damit der Nutenstein7 des teleskopischen Segments 5 mit seiner Frontseite 10 genau in sie eingreift und die innere Hinterwand 17 des Verankerungspunktes 3 berührt. Die Bewegung und die Bahn des Nutensteins 7 sind durch die Feder 9 und die Führung 8 eingegrenzt, die zwischen dem Träger 4 des Querbalkens 1 und dem Nutenstein 7 angeordnet ist. Die Druckfeder 9 ist derart ausgelegt, damit einerseits leichte Entsperrung des Nutensteins 7 und die Herausnahme des ganzen Querbalkens 1 aus dem Verankerungspunkt 3 oder der Führungsbahn 2 ermöglicht wird und anderseits zugleich eine ausreichende Andruckkraft des Nutensteines 7 zu der Führungsbahn 2 oder dem Verankerungspunkt 3 sichergestellt wird.

Die Hinterwand 16 der Führungsbahn 2, nach Fig. 4, weist eine glatte Kontaktfläche 11 auf. Der Nutenstein 7 wiest eine Frontseite 10 mit adhäsiver Frontfläche 12 auf. Die adhäsive Frontfläche 12 der Frontseite 10 des Nutensteins 7 liegt zur Hinterwand 16 der Führungsbahn 2 so an, damit die Längsbewegung des Nutensteines 7 in der Führungsbahn 2 höchstmöglich verhindert wird.

Im weiteren Ausführungsbeispiel, nach Fig. 5, weist die Hinterwand 16 der Führungsbahn 2 eine gerillte Kontaktfläche 13 auf. Der Nutenstein 7 weist ein Frontseite 10' mit mindestens einem Vorsprung 14 auf. Dieser Vorsprung 14 ist derart ausgestaltet, damit er genau in die gerillte Kontaktfläche 13 eingreift. Nach Bedarf kann auf der Frontseite 10' beliebige Anzahl der Vorsprünge 14 ausgebildet werden. Die Anzahl der Vorsprünge 14 hängt von der Form und Tiefe der gerillten Kontaktfläche 13 ab und zwar deshalb, weil hier ausreichender Widerstand für die Vermeidung der Längsbewegung 7 in der Führungsbahn 2 erreicht werden muss.

Im Ausführungsbeispiel mit der Verwendung von Verankerungspunkten 3 (Fig. 2) kann vorteilhaft der Nutenstein 7 derart ausgebildet werden, dass er genau einsenkt und an die Wände des Verankerungspunktes 3 bündig anschließt. In diesem Fall muss die Frontseite 10, 10' des Nutensteins keine adhäsive Frontfläche 12 sowie keine Vorsprünge 14 aufweisen.

Die Handhabung ist so gestaltet, dass zuerst mit Fingern der Entsperrteil 15 des Nutensteins 7 gegen die Kraft der Druckfeder 9 in der Pfeilrichtung (Fig. 3) zur Mitte des Querbalkens 1 eingedrückt wird. Danach wird in die Führungsbahn 2 oder den Verankerungspunkt 3 ein Nutenstein 7 des Querbalkens 1 eingesteckt. Dann wird die Einwirkung auf den Entsperrteil 15 des Steines 7 nachgelassen. Durch die Krafteinwirkung der Rückfeder 9 entsteht der notwendige Andruck der Frontseite 10, 10' des Nutensteins 7 auf die Hinterwand 16, 17 der Führungsbahn 2 oder des Verankerungspunktes 3 und so wird der ganze Querbalken 1 in der Führungsbahn 2 oder dem Verankerungspunkt 3 gesichert. Die Wiederentnahme des Querbalkens 1 wird so durchgeführt, dass zuerst die Finger den Entsperrteil 15 des Nutensteins 7 gegen die Kraft der Druckfeder 9 in der Pfeilrichtung (Fig. 3) zur Mitte des Querbalkens 1 eingedrückt wird. Danach wird aus der Führungsbahn 2 oder dem Verankerungspunkt 3 der Nutenstein 7 herausgeschoben und der Querbalken 1 kann entnommen werden.

In dem Ausführungsbeispiel mit der Führungsbahn 2 (Fig. 1) können bei,aktueller Nichtnutzung des Ablagesystems beide Querbalken 1 möglichst nah zur Rückseite der Hintersitze (in Pfeilrichtung) vorgeschoben werden.

Im Ausführungsbeispiel mit den Verankerungspunkten 3 (Fig. 2) können in der Nähe der Rückseite der Hintersitze an jeder Seite zwei Verankerungspunkte 3 ausgebildet werden. Bei aktueller Nichtnutzung des Ablagesystems können dann beide Querbalken 1 im Gepäckraum möglichst nah der Rückseite der Hintersitze (in der Pfeilrichtung) eingebaut bleiben.

Der Aufbewahrungsbezug 6 ist ein weicher, textil-, planen- evtl. netzartiger Teil des Ablagesystems, der im Balken 1 verankert ist.

Konkrete Ausführung der Führungsbahn ist hier nicht ausführlich beschrieben, da für den Gegenstand der Erfindung verschiedene bekannte Lösungen der Führungsbahnen verwendet werden können.

Die Verankerungspunkte sind an beiden seitlichen Gepäckraumverkleidungen in notwendiger Anzahl ausgebildet.

Die gegenständliche Erfindung bietet noch ein weiteres Ausführungsbeispiel und zwar so, dass der teleskopische Funktionsteil nur an einem Ende des Trägers des teleskopischen Querbalkens angeordnet ist.

### Industrielle Nutzbarkeit

Das erfindungsgemäße Kofferraumablagesystem eines Fahrzeugs kann in allen Automobilen eingesetzt werden, insbesondere dann bei Personenkraftfahrzeugen des Kombi-Typs, und vorteilhaft beispielsweise an den Seitenwänden des Gepäckraumes des Fahrzeuges angeordnet werden.

Verwendete Bezeichnungen
- 1: teleskopischer Querbalken des Kofferraumablagesystems
- 2: Führungsbahn des Kofferraumablagesystems
- 3: Verankerungspunkt des Kofferraumablagesystems
- 4: Träger des teleskopischen Querbalkens
- 5: teleskopisches Segment des Querbalkens
- 6: Aufbewahrungsbezug des Kofferraumablagesystems
- 7: Nutenstein des teleskopischen Segments
- 8: Führung des Nutensteins
- 9: Druckfeder
- 10,10': Frontseite des Steins
- 11: glatte Kontaktfläche der Führungsbahn
- 12: adhäsive Frontfläche der Frontseite des Nutensteins
- 13: gerillte Kontaktfläche der Führungsbahn
- 14: Vorsprung der Frontseite des Nutensteins
- 15: Entsperrteil des Nutensteins
- 16: Hinterwand der Führungsbahn
- 17: Hinterwand des Verankerungspunktes

## Patentansprüche

1. Das zum Transport und Aufbewahrung von Gegenständen im Fahrzeug dienendes Kofferraumablagesystem umfasst
eine Führungsbahn (2) oder mindestens zwei Verankerungspunkte (3) längs in der Seitenwandverkleidung an beiden gegenüberliegenden Seiten des Gepäckraumes angeordnet;
mindestens zwei teleskopische Querbalken (1), die aus einem Träger (4) und teleskopischem Segment (5) bestehen, das an mindestens einem Ende des jeweiligen Trägers (4) angeordnet ist;
ein Aufbewahrungsbezug (6), der zu den Trägern (4) entlang ihrer ganzen Länge befestigt ist und so die notwendige Ablagefläche bildet;
**dadurch gekennzeichnet, dass** das teleskopische Segment (5) des Querbalkens (1) aus eine Druckfeder (9), einem Nutenstein (7), der einen Entsperrteil (15) umfasst, und einer Führung (8), die die Bewegung des Nutensteins (7) eingrenzt, besteht.

2. Das Kofferraumablagesystem nach Anspruch 1 **dadurch gekennzeichnet, dass** die Führungsbahn (2) eine glatte Kontaktfläche (11) und der Nutenstein (7) eine Frontseite (10) mit adhäsiven Frontfläche (12) aufweist.

3. Das Kofferraumablagesystem nach Anspruch 1 **dadurch gekennzeichnet , dass** die Führungsbahn eine gerillte Kontaktfläche (13) und der Nutenstein (7) eine Frontseite (10') mindestens einen Vorsprung (14) aufweist, der für eine genaue Einsenkung in die gerillte Kontaktfläche (13) ausgestaltet ist.

4. Das Kofferraumablagesystem nach vorherigen Ansprüchen **dadurch gekennzeichnet, dass** der Aufbewahrungsbezug (6) als eine Plane ausgestaltet werden kann.

5. Das Kofferraumablagesystem nach vorherigen Ansprüchen **dadurch gekennzeichnet, dass** der Aufbewahrungsbezug (6) als ein Netz ausgestaltet werden kann.
